(19) Europäisches Patentamt

European Patent Office

Office européen des brevets

(11) Publication number: **0 511 436 A1**

## (12) EUROPEAN PATENT APPLICATION

(21) Application number: **91303845.1**

(22) Date of filing: **29.04.91**

(51) Int. Cl.5: **F16L 37/08**

(43) Date of publication of application:
**04.11.92 Bulletin  92/45**

(84) Designated Contracting States:
**AT BE CH DE DK ES FR GB GR IT LI LU NL SE**

(71) Applicant: **KABUSHIKI KAISHA HARMO SOGO KENKYUJO**
**7-35 Wakamiya 1-chome**
**Okaya-shi, Nagano-ken(JP)**

(72) Inventor: **Hama, Tomio, c/o K.K.Harmo Sogo Kenkyojo**
**7-35 Wakamiya 1-chome**
**Okaya-shi, Nagano-ken(JP)**

(74) Representative: **Dodd, David Michael et al**
**c/o Mewburn Ellis, 2 Cursitor Street**
**London EC4A 1BO(GB)**

(54) **Tubing joint.**

(57) A tubing joint comprising a body (20) having an opening into which a tube (10) is inserted for connection and a tube gripper (40) having radially inward toothed parts (46) to grip the outer surface of the tube (10) to resist disconnection characterised in that the gripper (40) is of substantially cylindrical shape for insertion into the body (20) and movable axially into the body (20) with gripper arms (44a, 44b, 44c, 44d) extending into the body (20), the gripper arms (44a, 44b, 44c, 44d) having radially outward projections (48) to engage in recesses (30) of predetermined axial extent in the body (20) each recess having interengagement means (31) for the gripper so that with projections (48) in recesses (30) axial movement of the gripper (40) causes increase of the inner diameter of the gripper (40) to receive the tube (10) and opposite movement of the gripper causes decrease of the inner diameter of the gripper (40) for the toothed parts (46) to engage the tube (10).

FIG.1

The present invention relates to a tubing joint. More precisely it relates to a tubing joint comprising a joint proper having an opening into which a tube is fitted for connection and a nail section(s) for biting or gripping the outer surface of the tube so as to prevent disconnection of the connected tube.

Many types of tubing joints are known. They are used to connect tubes to, e.g., machines driven by air pressure. Tubes can be connected by insertion into the tube joints because there are provided seal members in the tubing joints.

One of the conventional tubing joints is disclosed in the United States Patent No. 4,593,943. This tubing joint comprises a grip-ring whose grip-nails bite the outer wall of a tube inserted into the joint proper to prevent the inserted tube from moving in the tube-detaching direction, and a release-ring which releases the bite of the grip-nails on the outer wall of the inserted tube. The grip-ring is formed in a zigzag ring having a number of notches cut radially and alternately from the inner and outer circumferences of the ring. The outer extremity side of the grip-ring is bent by a constant amount in the tube-admitting direction and the bent ends, i.e., outer extremities, are inserted into a catching section to hold the grip-ring within the joint proper. The inner extremities of the grip-ring formed by the notches serve as grip-nails. The tubes are usually made of pliable synthetic resins so as to follow the movement of the machines. The grip-ring is an essential element, and is usually made of metal having prescribed strength.

The above described conventional tubing joint, however, has a grip-ring, a release-ring, etc., so its structure is complex and it may be troublesome to assemble such complex tubing joint.

An object of the present invention is to provide an improved tubing joint, which is of simple structure and which is easy to assemble.

To achieve the object the tubing joint an embodiment of the present invention comprises the following elements:

Engage means formed into cylindrical shape, the engage means is inserted into an opening of a joint proper movably in the axial direction thereof, the inner side of the engage means is divided as a plurality of engage pieces in the circumferential direction thereof, each of the engage pieces has a nail section on the inner face thereof, wherein the diameter of the inner side of the engage means is reduced and the nail sections bite the outer face of the tube when the engage means moves in the tube-detaching direction.

A plurality of concave sections formed on the inner face of the joint proper, the concave sections are arranged to correspond to the front ends of the engage pieces of the engage means inserted into the opening of the joint proper, the concave sections have prescribed length in the axial direction of the engage means.

A plurality of projected sections respectively provided on the outer circumferential surface of each engage piece, each of the projected sections always corresponds to each concave section so as to come thereinto.

And a plurality of enlarging means for enlarging the diameter of the inner side of the engage means, each of the enlarging means is provided in each concave section, wherein the diameter of the inner side of the engage means is enlarged by the enlarging means and the nail sections release the outer face of the tube when the engage means moves inward with respect to the joint proper.

In one embodiment of the present invention, the nail sections are provided on the engage means. Thus, the structure of the tubing joint is quite simple. The tube can be easily fixed in and disconnected from the joint proper by moving the engage means in its axial direction. The engage means and the joint proper can be made of synthetic resins, so that tubing joint can be assembled quite easily and mass production can be realized.

An embodiment of the present invention will now be described by way of example and with reference to the accompanying drawings, in which:

Fig. 1 shows a sectional view of an embodiment of a tubing joint of the present invention;

Fig. 2 shows a side view of the tubing joint of Fig. 1;

Fig. 3 shows a sectional view taken along line III - III in Fig. 1;

Fig. 4 shows a side view of an engage means;

Fig. 5 shows a side view of the engage means;

Fig. 6 shows an end view taken along line VI - VI in Fig. 5;

Fig. 7 shows an end view taken along line VII - VII in Fig. 5;

Fig. 8 shows an end view taken along line VIII - VIII in Fig. 5; and

Fig. 9 shows an end view taken along line IX - IX in Fig. 5.

A preferred embodiment of the present invention will now be described in detail with reference to accompanying drawings.

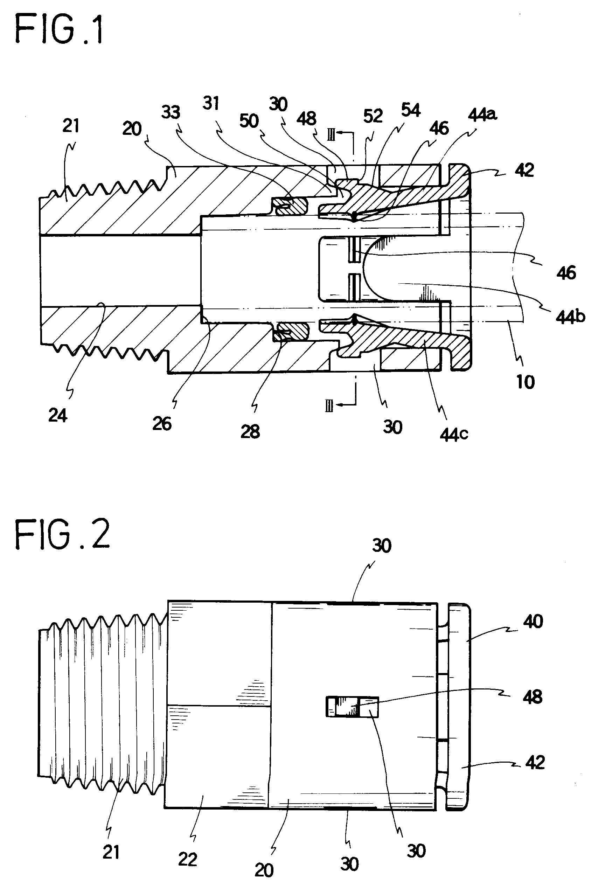

Fig. 1 shows a sectional view of this embodiment, and Fig. 2 shows its side view.

A body 20 has a flow path 24, a male screw section 21, and a head section 22 to which a tool is applied for attachment to a machine, etc. The flow path 24 is widened at a first step section 26 and further widened at a second step section 28.

Through-holes 30, which are an example of a recess , are bored about center between the second step section 28 and an opening into which a tube will be inserted. The longitudinal direction of the through-holes 30 is parallel to the axial direction of the body 20. There are four through-holes 30 in the circumferential direction of the body 20 at equal intervals.

An elastic sleeve 33 is inserted in the second step section 28. The elastic sleeve 33 seals the space between the outer surface of tube 10 inserted in the body 20 and the inner surface of the body 20.

Engage means in the form of a tube gripper 40 is inserted in the part of the flow path 24, which is widened from the second step section 28, through the opening of the body 20. The gripper 40 has a flange section 42, which sits outside the body 20, and four engage pieces or gripper arms 44a, 44b, 44c and 44d, which extend from the flange section 42 towards the flow path 24.

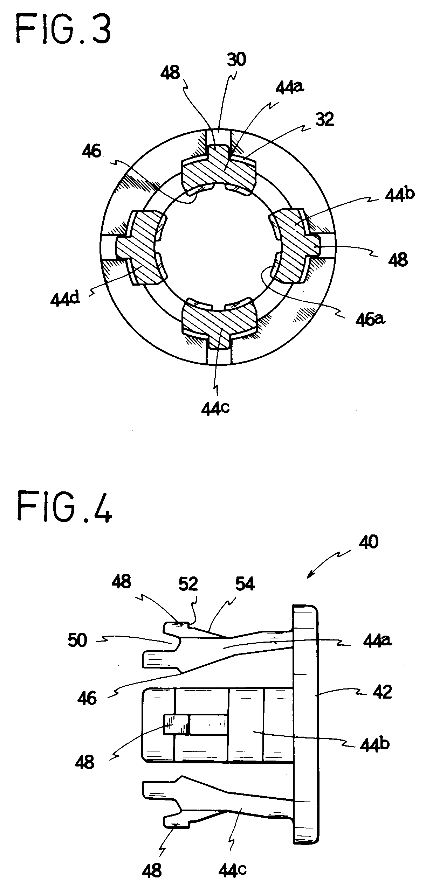

Fig. 3 shows a sectional view taken along line III - III in Fig. 1; Fig. 4 shows a side view of the gripper 40.

In Fig. 3, the gripper arms 44a, 44b, 44c and 44d are arranged in the circumferential direction at regular intervals.

Nail sections or toothed parts 46 are respectively provided on the inner faces of each gripper arm 44a, 44b, 44c and 44d. The toothed parts 46 are capable of biting the outer surface of the tube 10 so as to prevent the tube 10 from disconnecting. The tips of the toothed parts 46 are sharpened and their front shapes are formed into an arc corresponding to the outer shape of the tube 10. Each gripper arm 44a, 44b, 44c and 44d has two toothed parts 46; the gripper 40 has eight toothed parts 46.

In Fig. 4, there are projected sections 48 on the outer face of each arm 44a, 44b, 44c and 44d. The projected sections 48 are diagonally projected toward the front end of the gripper arms 44a, 44b, 44c and 44d. With this structure, there are formed spaces 50 between the projected sections 48 and the engage pieces 44a, 44b, 44c and 44d. In this embodiment, the inner faces of the projected sections 48 are formed (at angles acute to the axial direction).

There are formed engage steps 52 at the rear end sections of the projected sections 48. There are formed slope sections 54 backward from the base sections of the engage steps 52.

When the gripper 40 is inserted into the body 20, as shown in Fig. 1, the projected sections 48 respectively come into the through-holes 30 of the body 20, so that position in the circumferential direction of the gripper arms 44a, 44b, 44c and 44d is defined. The gripper 40 can be moved in the range which is equal to the movable length of the projected sections 48 in the through-holes 30.

A plurality of enlarging or interengaging means 31 are respectively formed on the front edge of each through-hole 30. The tips of the enlarging means 31 are in the spaces 50 (see Fig. 1). When the gripper 40 is pushed in the tube-admitting direction, the inner faces of the projected sections 48 contact the outer faces of the enlarging means 31.

Note that, there are grooved four grooves 32 on the inner circumferential surface of the joint proper 20 (see Fig. 3). The width of the grooves 32 is slightly greater than the width of the gripper arms 44a, 44b, 44c and 44d. The grooves 32 allow the gripper arms 44a, 44b, 44c and 44d to bend outward.

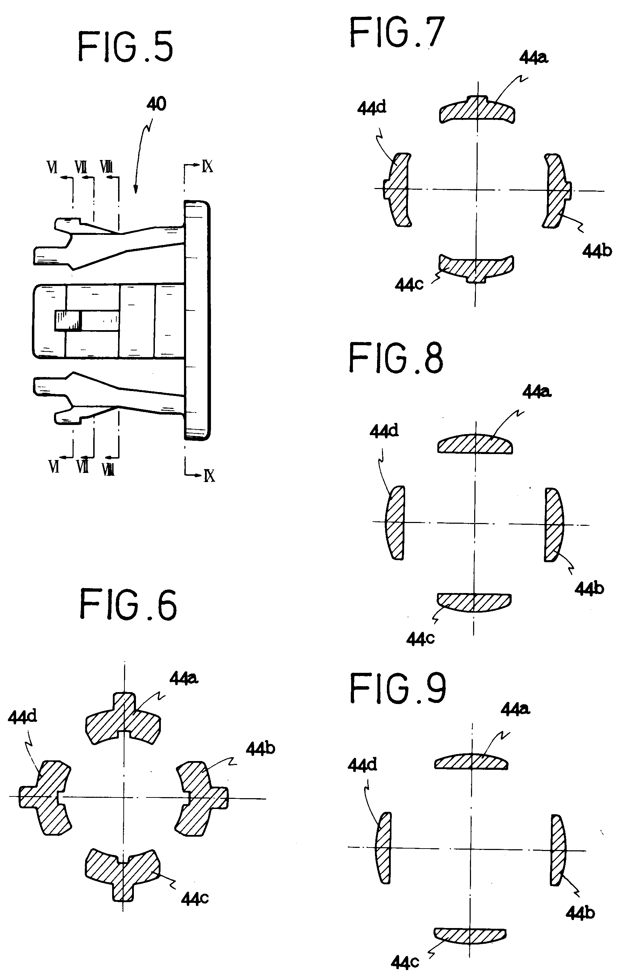

As described above, the gripper 40 has four arms 44a, 44b, 44c and 44d, which are divided in the circumferential direction of the gripper 40. End views, which are taken along lines VI - VI, VII - VII, VIII - VIII and IX - IX in Fig. 5, of the gripper arms 44a, 44b, 44c and 44d are shown in Figs. 6-9. The thickness of the arms 44a, 44b, 44c and 44d becomes gradually thinner from the distal end to the proximal end thereof. The inner face between the midway and the proximal end of the arms 44a, 44b, 44c and 44d is formed flat (see Figs. 8 and 9).

The flange section 42 and the arms 44a, 44b, 44c and 44d, etc. of the engage means 40 are formed in one body. They may be made of synthetic resins. The nail section 46 are also formed in the arms 44a, 44b, 44c and 44d. Synthetic resins for forming the toothed parts 46 and the arms 44a, 44b, 44c and 44d should have enough strength and durability because the toothed parts 46 prevent the flexible tube 10 from moving in the tube-detaching direction by biting the outer surface thereof. For example. Fiber Reinforced Plastics (F.R.P.) are preferably used as such synthetic resins.

In the example of Fig. 3, the toothed parts 46 have metal nails 46a. The metal nails 46a are capable of biting the outer surface of the tube 10 more tightly than plastic nails.

In this embodiment, the tube 10 is inserted into the opening of the body 20 until the front end of the tube 10 contacts the first step section 26, then the tube 10 is slightly pulled in the tube-detaching direction and locked. Namely, if the tube 10 is pulled from the first step section 26, the gripper 40 is also moved in the tube-detaching direction together with the tube 10, so that slopes 54 are pushed inward by the rear edges of the through-holes 30 to reduce the diameter of the front end of the engage means 40. With this diameter reduction, the toothed parts 46 bite the outer surface of the tube 10 and prevent the tube 10 from moving in the tube-detaching direction. The gripper 40 is limited in movement in the tube-detaching direction by steps 52, which contact the rear edges of the through-holes 30.

In this embodiment, eight toothed parts 46, which are provided on the gripper 40, bite the outer surface of the tube 10. Eight toothed parts 46 uniformly bite the tube 10, so that the tube 10 can be tightly secured.

Note that, the elastic sleeve 33 elastically seals the gap between the outer surface of the tube 10 and the inner surface of the flow path 24.

To disconnect the tube 10, the gripper 40 is moved in the tube-admitting direction by pushing the flange 42 inward together with the tube 10. The projected sections 48 come onto the outer face of the enlarging means 31, so that the front end of the gripper 40 is enlarged and the toothed parts 46 release the tube 10. Thus, the tube 10 can be easily disconnected from the body 20.

As shown in Figs. 8 and 9, the parts of the inner faces, which are near the proximal ends, of the arms 44a, 44b, 44c and 44d are flat, so that the front ends of the arms 44a, 44b, 44c and 44d can be moved easier even if they are made of hard synthetic resins. Namely, the diameter of the front end of the gripper 40 can be reduced and enlarged smoothly.

If the gripper 40 including the toothed parts 46 is made as one body, the body 20 and the gripper means 40 can be manufactured by resin molding. Therefore manufacturing cost of the tubing joint can be reduced.

The tubing joint of the present embodiment has the male screw section 21 for fixing to machines but the gripper 40 can be applied to not only such tubing joint but also many types of tubing joints. e.g., a coupler type, an elblow type, a T-type, a Y-type. Size and shape of the elements, e.g., number of the engage pieces and the nail sections, can be changed according to tubing joints to be applied.

The present invention is not limited to the above stated embodiment and modifications can be allowed without deviating from the scope of claims.

**Claims**

1. A tubing joint comprising a body (20) having an opening into which a tube (10) is inserted for connection and a tube gripper (40) having radially inward toothed parts (46) to grip the outer surface of the tube (10) to resist disconnection characterised in that the gripper (40) is of substantially cylindrical shape for insertion into the body (20) and movable axially into the body (20) with gripper arms (44a, 44b, 44c, 44d) extending into the body (20), the gripper arms (44a, 44b, 44c, 44d) having radially outward projections (48) to engage in recesses (30) of predetermined axial extent in the body (20) each recess having interengagement means (31) for the gripper so that with projections (48) in recesses (30) axial movement of the gripper (40) causes increase of the inner diameter of the gripper (40) to receive the tube (10) and opposite movement of the gripper causes decrease of the inner diameter of the gripper (40) for the toothed parts (46) to engage the tube (10).

2. A tube joint according to claim 1 wherein the gripper arms (44a, 44b, 44c, 44d) are angularly spaced at regular intervals about the gripper.

3. A tubing joint according to claim 1 or 2 wherein the toothed part (46) has an arcuate edge corresponding to the outer surface of the tube (10).

4. A tubing joint according to any one of claims 1 to 3 wherein each toothed part (46) is integrally formed on one of the gripper arms (44a, 44b, 44c, 44d).

5. A tubing joint according to any one of claims 1 to 4 wherein the recesses (30) in the inner circumferential surface of the body (20) are through-holes.

6. A tubing joint according to any one of claims 1 to 5 wherein the gripper (40) has a circumferential flange (42) to limit its depth of insertion into the body.

7. A tubing joint according to any one of claims 1 to 6 wherein the arms 44a, 44b, 44c, 44d have increased cross-section at their free ends.

8. A tubing joint according to any one of claims 1 to 7 wherein the inside of the body (20) has at least one reduced diameter portion providing a shoulder (26, 28).

# FIG.1

# FIG.2

# FIG.3

# FIG.4

# FIG.5

40

VI  VII  VIII                    IX

VI  VII  VIII                    IX

# FIG.6

44a

44d

44b

44c

# FIG.7

44a

44d

44b

44c

# FIG.8

44a

44d

44b

44c

# FIG.9

44a

44d

44b

44c

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 630 494 (VOLKSWAGEN AG) <br> * the whole document * <br> --- | 1-8 | F16L37/08 |
| X | WO-A-8 705 087 (GOBBI) <br> * abstract; figures * <br> --- | 1-4,6-8 | |
| X | DE-A-3 512 311 (KIENLE) <br> * abstract; figure * <br> --- | 1-4,6-8 | |
| E | EP-A-0 446 448 (FESTO KG) <br> * the whole document * <br> --- | 1-4,6-8 | |
| A | FR-A-2 532 396 (IMI NORGREN ENOTS LTD) <br> * figure 2 * <br><br> ----- | 1-2 | |
| | | | **TECHNICAL FIELDS SEARCHED (Int. Cl.5)** <br><br> F16L |

The present search report has been drawn up for all claims

| Place of search | Date of completion of the search | Examiner |
|---|---|---|
| THE HAGUE | 12 DECEMBER 1991 | NARMINIO A. |

EPO FORM 1503 03.82 (P0401)